# EUROPEAN PATENT SPECIFICATION

(11) **EP 3 971 929 B1**
(45) Date of publication and mention of the grant of the patent: **12.11.2025**
(21) Application number: 20197504.2
(22) Date of filing: 22.09.2020
(51) Int. Cl.: H01H 11/04, H01H 1/0237, H01H 1/027, H01H 1/021, B22F 1/054, B22F 1/10, B22F 7/06, B22F 7/08, B22F 10/25, B33Y 10/00, B33Y 80/00, C22C 1/05, C22C 1/10

(54) **ADDITIVE MANUFACTURING OF CONTACTS FOR ELECTRICAL SWITCHING DEVICES**
GENERATIVE FERTIGUNG VON KONTAKTEN FÜR ELEKTRISCHE SCHALTVORRICHTUNGEN
FABRICATION ADDITIVE DE CONTACTS POUR DISPOSITIFS DE COMMUTATION ÉLECTRIQUE

(43) Date of publication of application: 23.03.2022
(73) Proprietor: ABB Schweiz AG, 5400 Baden (CH)
(72) Inventor: JOHANSSON, Erik, 72245 Västerås (SE)
(74) Representative: Kransell & Wennborg KB

(56) References cited:
- CN-A- 105 695 982
- CN-A- 110 484 803
- CN-A- 111 979 536

## Description

### Field of the Invention

The present invention relates to a method for manufacturing arcing contacts for electrical switching devices. The present invention further relates to an electrical switching device and an arcing contact element.

### Background

Traditionally, contacts for large contactors and other similar devices such as low voltage breakers are manufactured by powder metallurgy methods. These methods typically include sintering and often die compaction or extrusion methods to form the contacts in the desired shapes. In a subsequent step contact tips are welded on a carrier.

However, the traditionally used technology poses several limitations. Firstly, the cycle time for the manufacturing process is relatively high. Secondly, the freedom in shape of the contacts is limited. For example, it would be desirable to avoid sharp corners in contacts since they are inferior to arc movement out from the contacts. Arcs that maintain on the contact cause increased risk of contact welding as a consequence, and contact welding is a critical issue especially for large contactors. However, in order to reduce the amount of waste material in production and due to limitations in the traditional manufacturing technology, rectangular cuboid contacts are mostly used.

Accordingly, there is room for improvement in electrical contacts for electrical switching devices.

CN 105 695 982 A discloses a method for manufacturing arcing contacts for electrical switching devices, the method comprising: providing a contact material powder comprising of a metal material powder and an additional component, and forming an arcing contact from the contact material powder on a contact carrier using directed energy deposition .

### Summary

In view of the above-mentioned and other drawbacks of the prior art, it is an object of the present invention to provide a method for manufacturing arcing contacts that alleviates at least some of the drawbacks of prior art. The proposed method according to claim 1 provides for forming arcing contacts comprising graphene and/or functionalized graphene based on directed energy deposition.

According to the invention, there is provided a method for manufacturing arcing contacts for electrical switching devices, the method comprising: providing a contact material powder comprising of a metal material powder which is a silver material powder and at least one of graphene and/or functionalized graphene, and forming an arcing contact from the contact material powder on a contact carrier using directed energy deposition.

The present invention is at least partly based on the realization to manufacture electrical contacts from a powder comprising a metal and a graphene additive using directed energy deposition. It was realized that using directed energy deposition provides for producing arcing contacts with nearly arbitrary shapes in less time compared to traditional techniques. Further, directed energy deposition techniques also enable manufacturing arcing contacts comprising different material distributions and layered structures. Additionally, the inventors realized that addition of graphene and/or functionalized graphene in the arcing contact reduces the risk of contact welding.

Accordingly, by means of embodiments of the present invention, improved arcing contacts with nearly arbitrary shapes may be manufactured in less time compared to prior art techniques. Further, the amount of metal material may be reduced thereby saving cost. For example, using the proposed direct energy deposition, the thickness of the arcing contacts may be better adapted to an electrical current rating of the application at hand. A typical thickness of an arcing contact may be approximately 100 micrometer to approximately a few millimeters.

It should be understood that graphene in various forms may be used for embodiments of the present invention. For example, pure graphene, or other functionalized derivates of graphene such as graphene oxide may be used.

The concentration of graphene and/or functionalized graphene in the contact material powder is preferably from approximately 0.01% to approximately 3% by weight. Accordingly, the resulting arcing contact comprises graphene or and/or functionalized graphene distributed in a matrix of the metal material, where the concentration of graphene and/or functionalized graphene is approximately 0.01% to approximately 3% by weight.

The concentration of graphene and/or functionalized graphene is preferably below 3%.

The metal may be considered a matrix for dispersed particles/granulates graphene or and/or functionalized graphene.

The graphene and/or functionalized graphene should preferably be dispersed in the carrying material matrix, e.g. a pure metal matrix or a mix of metal and non-metal matrix, such that at least the majority of islands of metal in the produced arcing contacts are smaller than approximately 5 micrometers.

Directed energy deposition may herein be performed using various specific techniques such as laser metal deposition or thermal spray. The preferred technology is laser metal deposition.

The term "electrical switching device" should be interpreted broadly and may relate to devices such as low voltage contactors, low voltage circuit breakers, low voltage switch disconnectors, manual motor starters, although other devices are also conceivable.

A powder as disclosed herein should be interpreted broadly but is generally a solid comprising fine particles. A powder may further be interpreted as a granular. Particularly, a powder is herein suitable for use in directed energy deposition, such as e.g. laser energy deposition.

According to embodiments, the arcing contact may be manufactured directly on the contact carrier using directed energy deposition. In other words, the proposed method advantageously eliminated the need for e.g. welding the contact onto a carrier in a subsequent step, thereby simplifying the overall manufacturing of the arcing contact for the electrical switching device and reduces manufacturing time.

According to embodiments, forming the arcing contact may comprise forming a first arcing contact layer with a first concentration of at least one of graphene and/or functionalized graphene in the contact material powder, and subsequently forming a second layer with a second concentration of at least one of graphene and/or functionalized graphene in the contact material powder. The layers may be manufactured by using the directed energy deposition with varying concentration of at least one of graphene and/or functionalized graphene. In other words, by varying the concentration of at least one of graphene and/or functionalized graphene during the directed energy deposition, the arcing contact may be formed with different layers of different concentrations of graphene to thereby tailor the arcing contact depending on the application at hand. Further, it may be desirable to have a higher concentration or a better adapted concentration of graphene and/or functionalized graphene closer to the electrical contact surface of the arcing contact to thereby further reduce the risk contact welding.

According to embodiments, the concentration of the at least one of graphene and/or functionalized graphene in the contact material powder may be varied during forming of the arcing contact to thereby form an arcing contact with a spatial gradient of at least one of graphene and/or functionalized graphene. Thus, the concentration of graphene and/or functionalized graphene may be continuously varied while forming the arcing contact. In this way, an arcing contact with a spatial gradient of graphene and/or functionalized graphene may advantageously be performed in a single continuous directed energy deposition process. As mentioned above, it may be desirable to have a higher concentration or a better adapted concentration of graphene and/or functionalized graphene closer to the contact surface of the arcing contact to thereby further reduce the risk for contact welding. The concentration of graphene and/or functionalized graphene across such gradient may vary from e.g. 0.01% to about 3% by weight, or e.g. 0.5% to about 2% by weight, or from 0% to about 2% by weight, or from 0% to about 1.5% by weight.

According to embodiments, forming the arcing contact may comprise forming a first arcing contact layer using only metal powder or a contact material powder comprising a mix of a metal powder and a non-metal powder in the directed energy deposition, and subsequently forming a second arcing contact layer using the contact material powder comprising of a metal material powder and at least one of graphene and/or functionalized graphene in the directed energy deposition.

According to embodiments, the contact material may be a substantially homogenous mix of the metal powder and at least one of graphene and/or functionalized graphene.

Advantageously, embodiments of the present invention provide for forming arcing contacts having tailored concentrations of graphene and/or functionalized graphene in the produced arcing contact. The present amount of graphene and/or functionalized graphene in the contact material powder affects the flowability of the contact material powder which may be taken advantage of for forming an arcing contact of close to arbitrary shape. Accordingly, varying the concentration of graphene and/or functionalized graphene in the contact material powder advantageously allows for tailoring the shape and electrical contact characteristics such as prevention of contact welding of the produced arcing contact.

Multi-layer arcing contacts provides low arc erosion and low contact resistance. For example, the upper layer may be adapted, e.g. having larger concentration of graphene in order to reduce the risk of contact welding, and the bottom layer may have less graphene in order to provide low contact resistance to the carrier substrate.

According to embodiments, a first powder comprising at least one of graphene and/or functionalized graphene may be mixed with a metal material powder during the directed energy deposition, wherein the first powder may be a mix of the at least one of graphene and/or functionalized graphene with powder of the metal material. Providing the first powder being a mix of graphene and/or functionalized graphene and a metal material advantageously provides for well-dispersed graphene and/or functionalized graphene in the contact material powder.

Advantageously, forming the arcing contact may be made using a single continuous manufacturing processing step.

The contact material powder comprises silver. Moreover, according to embodiments, the contact material powder may comprise more than one metal material such as at least one of cooper and tungsten. The contact material powder may advantageously comprise tungsten in order to reduce contact erosion. Further, the contact material powder may comprise a non-metal material such as tungsten-carbide, tin-oxide, and zinc-oxide.

According to embodiments, the method may comprise forming the arcing contact to have at least one rounded corner, using the directed energy deposition.

According to embodiments, the method may comprise forming the arcing contact to have at least one serrated surface, using the directed energy deposition.

According to embodiments, the method may comprise forming the arcing contact to have an at least partly domed shape, using the directed energy deposition.

Accordingly, the present invention provides for manufacturing an arcing contact of various shapes that advantageously improves the performance of the arcing contact. For example, rounded corners may reduce the risk of an arc getting stuck in a corner or leave the contact area. A serrated surface improves thermal properties and reducing the risk of contact welding. A domed shape improves the thermal properties of the arcing contact.

Further features of, and advantages with, the present invention will become apparent when studying the appended claims and the following description. The skilled person realize that different features of the present invention may be combined to create embodiments other than those described in the following, without departing from the scope of the present invention, defined by the appended claims.

### Brief Description of the Drawings

These and other aspects of the present invention will now be described in more detail, with reference to the appended drawings showing an example embodiment of the invention, wherein:
Fig. 1A-B conceptually illustrates an arcing contact arrangement for an electrical switching device;
Fig. 2 is a flow-chart of method steps according to embodiments of the present invention;
Fig. 3 conceptually illustrates a laser metal deposition tool;
Fig. 4 is a flow-chart of method steps according to embodiments of the present invention;
Figs. 5A-E each conceptually illustrates arcing contacts on carrier substrates according to various embodiments of the invention;
Figs. 6A-G conceptually illustrates arcing contacts on of different shapes according to various embodiments of the invention; and
Fig. 7 schematically illustrates an electrical switching device according to an embodiment of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

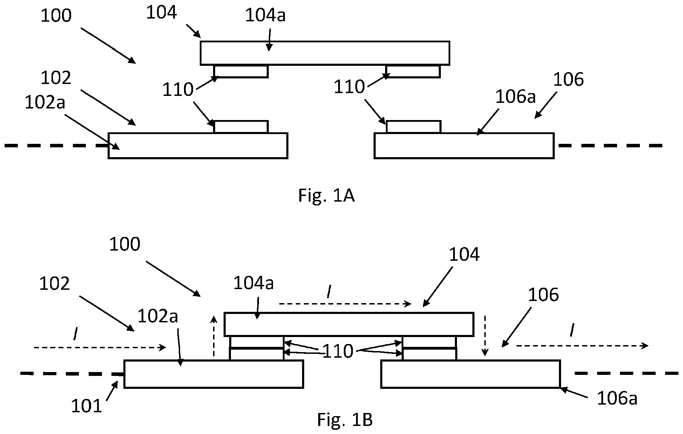

Fig. 1A conceptually illustrates an arcing contact arrangement 100 for an electrical switching device such as low voltage contactors, low voltage circuit breakers, low voltage switch disconnectors, manual motor starters, although other devices are also conceivable.

The arcing arrangement 100 comprises a set of arcing contact elements, a first arcing contact element 102, a second arcing contact element 104, and a third arcing contact element 106. Each of the arcing contact elements comprises a carrier substrate 102a, 104a, and 106a and an arcing contact 110.

Fig. 1A illustrates the conceptual arcing contact arrangement 100 in an open state in which no electrical current flows through the arcing contact arrangement 100. In a closed state, and now with reference to fig. 1B, an electrical current *I* may flow from a current inlet 101 at the first arcing contact element 102 and via its arcing contact 110 to the arcing contact 110 of the second arcing contact element 104 and subsequently to the third arcing contact element 106 via its arcing contact 110. The second arcing contact element 104 may be e.g. spring loaded in order to maintain the second arcing contact element 104 in the closed state shown in fig. 1B. The electrical current *I* further flows through the carrier substrates 102a, 104a, and 106a.

When transitioning between open and closed states, arcs between the contacting arcing elements 110 may occur and this is one of the issues addressed by the present invention as well as contact welding between arcing elements 110 that contact each other.

The operation of an arcing contact arrangement is assumed to be known *per se* to the skilled person and will not be described in more detail.

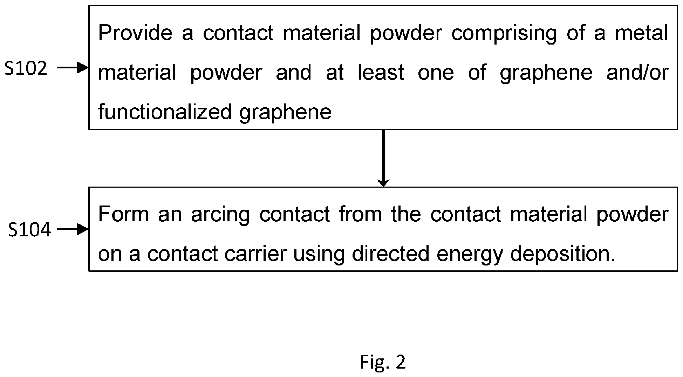

Fig. 2 is a flow chart of method steps according to embodiments of the present invention. The flow-chart describes steps for manufacturing arcing contacts for electrical switching devices.

In step S102, providing a contact material powder comprising of a metal material powder and at least one of graphene and/or functionalized graphene.

In step S104 forming an arcing contact from the contact material powder on a contact carrier using directed energy deposition.

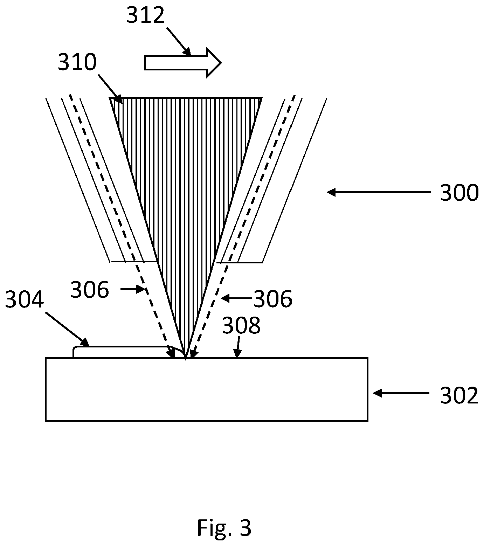

Directed energy deposition may herein be performed using various specific techniques such as laser metal deposition or thermal spray. However, the preferred technology is laser metal deposition which will briefly be discussed with reference to fig. 3.

Fig. 3 conceptually illustrates a tool 300 for laser metal deposition of a material on a workpiece 302. The workpiece may herein be a carrier substrate 302 for an arcing contact 304. During a manufacturing process, a stream 306 of contact material powder comprising of a metal material powder and at least one of graphene and/or functionalized graphene is provided to the surface 308 of the contact carrier 302. A laser beam 310 is applied at the melt pool where the stream 306 of contact material powder is applied. The laser beam 310 melts the contact material powder 306 on the carrier substrate 302 whereby an arcing contact 304 is formed. The processing direction of the laser energy deposition tool 300 is to the right in fig. 3, i.e. the tool 300 is moved to the right as indicated by arrow 312. Many different variations of laser energy deposition may be conceivable and the herein described example only serves to describe the general principle.

Using directed energy deposition provides for producing arcing contacts or nearly arbitrary shapes in a less time compared to traditional techniques. For example, a typical prior art welding cycle time may be almost 10 seconds whereas using methods proposed herein such as laser metal deposition may reduce the cycle time to only a few seconds, such as 2-3 seconds, assuming a deposition rate of about 100 mm³/s.

Using directed energy deposition such as laser metal deposition, the shape of the arcing contacts can be chosen with almost no constraints which enables e. g. rounded contacts with serrations. This improves arc movement, decrease break time of the electrical switching device as well as reduced contact erosion and improved contact welding performance. In addition, the interface between the silver-based contact material and the contact carrier could be controlled in a very good way by laser metal deposition, both because of the controlled melt pool depth as well as the possibility to use a gradient from pure e.g. silver to the actual contact composition at the top surface of the arcing contact. Thus, by using laser metal deposition, it is possible to produce gradients or multi-layers by just mixing contact material powders in different contents. Hence, the graphene concentration could be varied throughout the thickness of the arcing contact.

Embodiments of the present invention provides for manufacturing arcing contact with varying concentration of graphene and/or functionalized graphene across or through the arcing contact. This may either be provided in a layered structure or as a spatial concentration gradient of graphene and/or functionalized graphene along at least one spatial extension of the arcing contact.

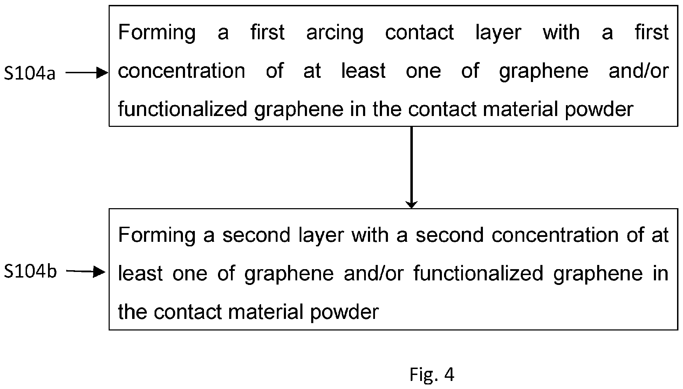

Fig. 4 is a flow-chart of method steps reflecting such embodiments. The step S104 in fig. 2 may include steps S104a and S104b now described with reference to fig. 4.

In step S104a forming a first arcing contact layer with a first concentration of at least one of graphene and/or functionalized graphene in the contact material powder. In step S104b, forming a second layer with a second concentration of at least one of graphene and/or functionalized graphene in the contact material powder. The different layers are manufactured by using directed energy deposition with varying concentration of at least one of graphene and/or functionalized graphene. Advantageously, whether or not different layers are manufactured, forming the arcing contact is made using a single continuous manufacturing processing step. In other words, either the same contact material powder is used throughout the manufacturing process, or the contact material powder is altered during the laser metal deposition to thereby produce a layered structure or an arcing contact having gradients of graphene and/or functionalized graphene.

A layered structure of different concentrations of graphene and/or functionalized graphene with a higher concentration at the top layer reduces the risk of contact welding at the beginning of the lifetime of the arcing contact, when the risk of contact welding is highest. Further, a reduced concentration of graphene and/or functionalized graphene in the main body, below the top layer, advantageously provides for reduced contact erosion.

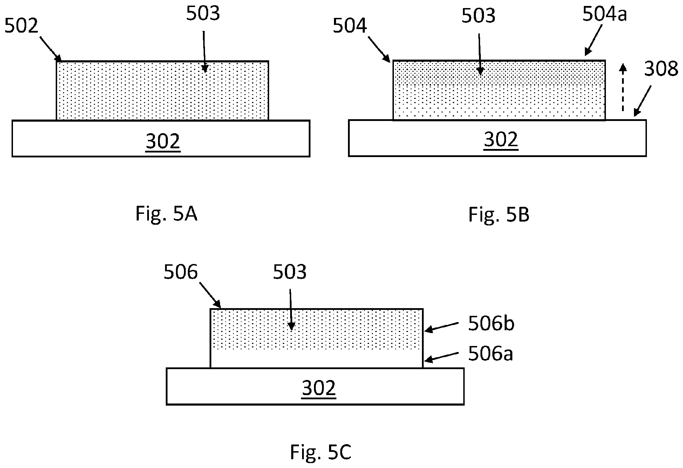

Figs. 5A-E conceptually illustrates different types of arcing contacts manufactured on carrier substrates 302 using directed energy deposition, such as laser metal deposition.

Fig. 5A conceptually illustrates an arcing contact 502 manufactured on carrier substrate 302. The arcing contact 502 comprises a substantially homogenous distribution of graphene and/or functionalized graphene 503 dispersed in the metal, thus, the metal serves as a matrix for the graphene and/or functionalized graphene 503. The metal may for example be silver or silver based materials. Further, the arcing contact 502 may comprise tungsten. The arcing contact 502 may be produced from a contact material being a substantially homogenous mix of the metal powder and at least one of graphene and/or functionalized graphene. This simplified manufacturing since only a single type of contact material powder is required. Further, the contact material may additionally comprise more than one metal material, e.g. copper, and/or tungsten, and/or a non-metal material powder such as at least one of e.g. tungsten-carbide, tin-oxide, and zinc-oxide. The concentration of graphene and/or functionalized graphene in the contact material powder is preferably in the range of approximately 0.01% to approximately 3% by weight, or more preferably in the range of approximately 0.05% to approximately 2% by weight. The island size of metal and/or non-metal material in the arcing contact is preferably smaller than about 5 micrometers.

Fig. 5B conceptually illustrates an arcing contact 504 manufactured on carrier substrate 302. The arcing contact 504 has a spatial gradient of at least one of graphene 503 and/or functionalized graphene 503. Here the spatial gradient is an increasing concentration of graphene 503 and/or functionalized graphene 503 across the height of the contact 504, starting from the interface with the surface 308 of the carrier substrate 302 and moving towards the top surface 504a of the arcing contact 504. Thus, the concentration of graphene 503 and/or functionalized graphene 503 is higher just below the top surface 504a compared to just above the surface 308 of the carrier substrate 302. This type of arcing contact 504, having a spatial gradient of graphene 503 and/or functionalized graphene 503 may be formed by varying the concentration of the at least one of graphene and/or functionalized graphene in the contact material powder during forming of the arcing contact 504. The concentration of graphene 503 and/or functionalized graphene 503 used at the bottom may be e.g. 0% or 0.01% or 0.05% and the concentration used in the contact material powder at the surface 504a may be e.g. 1%, or 1.5%, or 2%, or 2.5% by weight. However other concentrations of graphene 503 and/or functionalized graphene 503 may be conceivable, but here with a spatial gradient across the height of the arcing contact 504.

Figs. 5C-E conceptually illustrates arcing contacts with layered structures.

In fig. 5C, the conceptually illustrated arcing contact 506 comprises a bottom layer 506a that has no graphene 503 and/or functionalized graphene 503 and may thus be a layer 506a of pure metal, such as silver, or e.g. a silver and tungsten layer 506a. This provides for improved contact resistance at the interface between the carrier substrate 302 and the arcing contact 506. The second layer 506b, located on the bottom layer 506a, comprises graphene 503 and/or functionalized graphene 503, either homogeneously dispersed or as a gradient. Note that residues of graphene 503 and/or functionalized graphene 503 may be allowed in the bottom layer 506a.

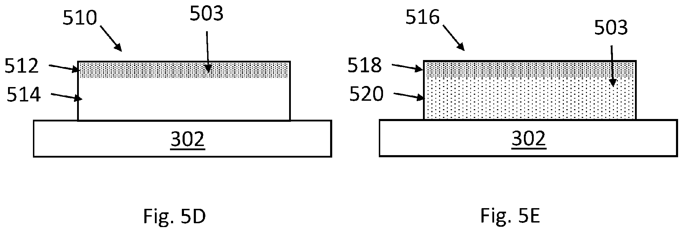

Fig. 5D conceptually illustrates an arcing contact 510 having a graphene 503 and/or functionalized graphene 503 enriched top layer 512. This provides for reduced risk of contact welding at the top layer 512 without having to provide the entire arcing contact 510 with graphene 503 and/or functionalized graphene 503. As discussed above, providing a higher concentration of graphene 503 and/or functionalized graphene 503 at the top layer 512 reduces the risk of contact welding at the beginning of the lifetime of the arcing contact 510 when the risk of contact welding is highest. Further, a reduced concentration of graphene 503 and/or functionalized graphene 503 in the main body 514 advantageously provides for reduced contact erosion. The arcing contact may further comprise silver and/or tungsten, and/or tungsten-carbide, and/or tin-oxide, and/or zinc-oxide. For example, in one possible implementation, the arcing contact 510 comprises silver-tungsten with only the top layer 512 comprising graphene 503 and/or functionalized graphene 503. The main body 514 of the arcing contact may comprise substantially only silver-tungsten. Note that residues of graphene 503 and/or functionalized graphene 503 may be allowed in the main body 514. Further, the main body may be made from a first metal and/or non-metal, whereas the top layer 512 may be made from a second metal and/or non-metal different from the first metal and/or non-metal. For example, the main body 514 of the arcing contact may be made from silver-tungsten, and the top layer 512 may comprise silver and graphene 503 and/or functionalized graphene 503.

The arcing contacts in figs 5C and 5D may be produced by forming a first arcing contact layer using only metal powder or a powder comprising a mix of a metal powder and a non-metal powder, and subsequently forming a second layer comprising a concentration of at least one of graphene 503 and/or functionalized graphene 503 in the contact material powder.

Fig. 5E conceptually illustrates a further possible arcing contact 516 according to embodiments. The arcing contact 518 comprises a first layer 520 of a first concentration of graphene 503 and/or functionalized graphene 503. A second layer 518, being a top layer of the arcing contact 512 is a graphene 503 and/or functionalized graphene 503 enriched top layer 518. The enriched top layer 518 may comprise at least twice the concentration of graphene 503 and/or functionalized graphene 503 as the body 520 of the arcing contact 516. In possible implementations, the concentration of graphene 503 and/or functionalized graphene 503 in the enriched top layer 518 is at least three times higher or approximately three times higher than in the body 520 of the arcing contact 516. In a further possible implementation, the concentration of graphene 503 and/or functionalized graphene 503 in the enriched top layer 518 is at least four times higher or approximately four times higher than in the body 520 of the arcing contact 516. In a further possible implementation, the concentration of graphene 503 and/or functionalized graphene 503 in the enriched top layer 518 is at least five times higher or approximately five times higher than in the body 520 of the arcing contact 516.

In possible implementations, the concentration of graphene 503 and/or functionalized graphene 503 in the enriched top layer 518 is selected from the range of twice as high to five times higher than in the body 520 of the arcing contact 516.

Preferably, the concentration of graphene 503 and/or functionalized graphene 503 does not exceed 3% by weight.

In order to provide a well dispersed contact material powder, it may be advantageous to mix a first powder being a mix of the at least one of graphene and/or functionalized graphene with powder of the metal material or a powder comprising a metal mixed with a non-metal material. During the directed energy deposition process, the first powder is mixed with a metal material powder, or the first powder is mixed with a metal and non-metal powder mix.

The carrier substrate described herein may be a copper carrier substrate, although the carrier substrate may comprise other materials. However, the carrier substrate should be adapted to carry electrical currents with relatively low resistance.

Each of the arcing contacts described with reference to figs. 5A-E, or other arcing contacts described herein are produced using a contact material powder 306 comprising silver. Further, the contact material powder 306 may comprise more than one metal, such as a combination of one or more of silver and copper and nickel and tungsten. Still further, the contact material powder 306 may comprises a non-metal material such as and/or tungsten-carbide, and/or tin-oxide, and/or zinc-oxide. Generally, the contact material powder may comprise silver-tungsten, silver-tungsten-carbide, silver-zinc-oxide, as example arcing contact materials to be mixed with graphene and/or functionalized graphene.

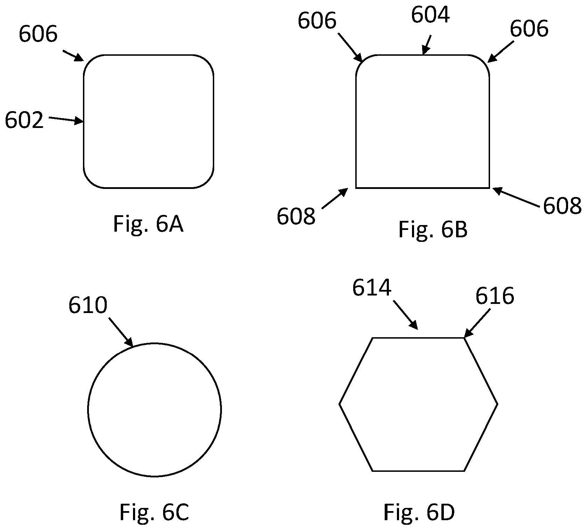

The present invention provides for manufacturing arcing contacts of various shapes on contact carriers. Figs. 6A-D are top views of conceptual arcing contacts. For example, as shown in figs. 6A and 6B, an arcing contact 602 and 604 may be formed to have at least one rounded corner 606. The arcing contact 602 in fig. 6A has four rounded corners 606 and the arcing contact in fig. 6B has both sharp corners 608 and rounded corners 606, here two sharp corners 608 and two rounded corners 606. Fig. 6C conceptually illustrates a circular arcing contact 610.

Fig. 6D conceptually illustrates a polygonal arcing contact 614, here shown with six corners 616 (only one is numbered) that may be manufactured using the herein proposed directed energy deposition. Each of the corners 616 may be sharp or rounded.

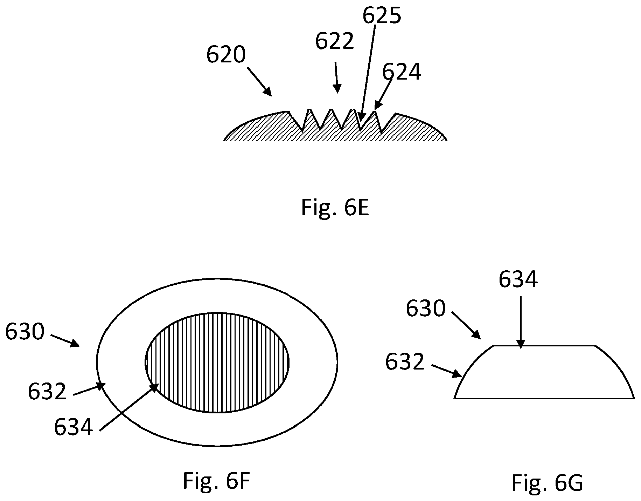

Fig. 6E conceptually illustrates a cross-section of an arcing contact 620 having a serrated surface 622 that has been manufactured using the herein proposed directed energy deposition. A serrated surface 622 comprises saw-like or tooth-like protrusions 624 forming valleys 625 between them.

As a further example, figs. 6F-G conceptually illustrates an arcing contact 630 to have an at least partly domed shape that may be produced using the directed energy deposition. Fig. 6F is a top view of the arcing contact 630 and fig. 6G is a side view of the arcing contact 630. The arcing contact 630 comprises a dome-shaped portion 632 and a top planar surface 634 that "cuts" the top of the dome-shape.

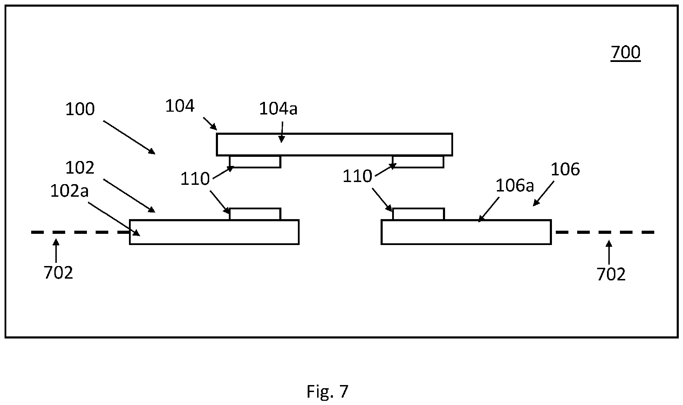

Turning to fig. 7, there is further provided an electrical switching device 700 comprising a set of arcing contact elements 102, 104, 106, each comprising a contact carrier 102a, 106a, 104a, and at least one arcing contact 110 formed on the respective contact carrier. The arcing contact 110 comprising at least one metal material and at least one of graphene and/or functionalized graphene, wherein the arcing contact is manufactured on the contact carrier using directed energy deposition based on a contact material powder comprising a metal material powder and at least one of graphene and/or functionalized graphene. The wiring/leads 702 may connect to a circuit (not shown) that is operated by the electrical switching device 700.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for manufacturing arcing contacts (110) for electrical switching devices (700), the method comprising:
providing (S102) a contact material powder (306) comprising of a metal material powder which is a silver material powder and at least one of graphene (503) and/or functionalized graphene (503), and
forming (S104) an arcing contact from the contact material powder on a contact carrier (102a, 104a, 106a, 302) using directed energy deposition.

2. The method according to claim 1, wherein the arcing contact is manufactured directly on the contact carrier using directed energy deposition.

3. The method according to any one of claims 1 and 2, wherein forming the arcing contact comprises:
forming (S104a) a first arcing contact layer with a first concentration of at least one of graphene and/or functionalized graphene in the contact material powder, and subsequently
forming (S104b) a second arcing contact layer with a second concentration of at least one of graphene and/or functionalized graphene in the contact material powder.

4. The method according to any one of the preceding claims, wherein the concentration of the at least one of graphene and/or functionalized graphene in the contact material powder is varied during forming of the arcing contact to thereby form an arcing contact with a spatial gradient of at least one of graphene and/or functionalized graphene.

5. The method according to any one of claims 1 and 2, wherein forming the arcing contact comprises:
forming a first arcing contact layer using only metal powder or a contact material powder comprising a mix of a metal powder and a non-metal powder in the directed energy deposition, and subsequently
forming a second arcing contact layer using the contact material powder comprising of a metal material powder and at least one of graphene and/or functionalized graphene in the directed energy deposition.

6. The method according to any one of claims 1 and 2, wherein the contact material is a substantially homogenous mix of the metal powder and at least one of graphene and/or functionalized graphene.

7. The method according to any one of the preceding claims, wherein a first powder comprising at least one of graphene and/or functionalized graphene is mixed with a metal material powder during the additive manufacturing process, wherein the first powder is a mix of the at least one of graphene and/or functionalized graphene with powder of the metal material.

8. The method according to any one of the preceding claims, wherein forming the arcing contact is made using a single continuous manufacturing processing step.

9. The method according to any one of the preceding claims, wherein the contact material powder comprises more than one metal material, and/or wherein the contact material powder comprises a non-metal material.

10. The method according to any one of the preceding claims, wherein the concentration at least one of graphene (503) and/or functionalized graphene (503) in the contact material powder is in the range of 0.01% to 3% by weight, preferably 0.05% to approximately 2% by weight.

11. The method according to any one of the preceding claims, comprising forming the arcing contact to have at least one rounded corner, using the directed energy deposition.

12. The method according to any one of the preceding claims, comprising forming the arcing contact to have at least one serrated surface, using the directed energy deposition.

13. The method according to any one of the preceding claims, comprising forming the arcing contact to have an at least partly domed shape, using the directed energy deposition.

## Patentansprüche

1. Verfahren zum Fertigen von Lichtbogenkontakten (110) für elektrische Schaltvorrichtungen (700), wobei das Verfahren umfasst:
Bereitstellen (S102) eines Kontaktmaterialpulvers (306), das ein Metallmaterialpulver umfasst, das ein Silbermaterialpulver und mindestens eines von Graphen (503) und/oder funktionalisiertem Graphen (503) ist, und Bilden (S104) eines Lichtbogenkontakts aus dem Kontaktmaterialpulver auf einem Kontaktträger (102a, 104a, 106a, 302) unter Verwendung von gerichteter Energieabscheidung.

2. Verfahren nach Anspruch 1, wobei der Lichtbogenkontakt direkt auf dem Kontaktträger unter Verwendung von gerichteter Energieabscheidung gefertigt wird.

3. Verfahren nach einem der Ansprüche 1 und 2, wobei Bilden des Lichtbogenkontakts umfasst:
Bilden (S104a) einer ersten Lichtbogenkontaktschicht mit einer ersten Konzentration von mindestens einem von Graphen und/oder funktionalisiertem Graphen in dem Kontaktmaterialpulver und anschließend
Bilden (S104b) einer zweiten Lichtbogenkontaktschicht mit einer zweiten Konzentration von mindestens einem von Graphen und/oder funktionalisiertem Graphen in dem Kontaktmaterialpulver.

4. Verfahren nach einem der vorhergehenden Ansprüche, wobei die Konzentration des mindestens einen von Graphen und/oder funktionalisiertem Graphen in dem Kontaktmaterialpulver während des Bildens des Lichtbogenkontakts variiert wird, um dadurch einen Lichtbogenkontakt mit einem räumlichen Gradienten von mindestens einem von Graphen und/oder funktionalisiertem Graphen zu bilden.

5. Verfahren nach einem der Ansprüche 1 und 2, wobei Bilden des Lichtbogenkontakts umfasst:
Bilden einer ersten Lichtbogenkontaktschicht unter Verwendung von nur Metallpulver oder einem Kontaktmaterialpulver, das ein Gemisch aus einem Metallpulver und einem Nichtmetallpulver umfasst, in der gerichteten Energieabscheidung und anschließend
Bilden einer zweiten Lichtbogenkontaktschicht unter Verwendung des Kontaktmaterialpulvers, das ein Metallmaterialpulver und mindestens eines von Graphen und/oder funktionalisiertem Graphen umfasst, in der gerichteten Energieabscheidung.

6. Verfahren nach einem der Ansprüche 1 und 2, wobei das Kontaktmaterial ein im Wesentlichen homogenes Gemisch des Metallpulvers und mindestens eines von Graphen und/oder funktionalisiertem Graphen ist.

7. Verfahren nach einem der vorhergehenden Ansprüche, wobei ein erstes Pulver, das mindestens eines von Graphen und/oder funktionalisiertem Graphen umfasst, während des generativen Fertigungsprozesses mit einem Metallmaterialpulver gemischt wird, wobei das erste Pulver ein Gemisch des mindestens einen von Graphen und/oder funktionalisiertem Graphen mit Pulver des Metallmaterials ist.

8. Verfahren nach einem der vorhergehenden Ansprüche, wobei Bilden des Lichtbogenkontakts unter Verwendung eines einzigen kontinuierlichen Fertigungsverarbeitungsschritts erfolgt.

9. Verfahren nach einem der vorhergehenden Ansprüche, wobei das Kontaktmaterialpulver mehr als ein Metallmaterial umfasst, und/oder wobei das Kontaktmaterialpulver ein Nichtmetallmaterial umfasst.

10. Verfahren nach einem der vorhergehenden Ansprüche, wobei die Konzentration von mindestens einem von Graphen (503) und/oder funktionalisiertem Graphen (503) in dem Kontaktmaterialpulver im Bereich von 0,01 bis 3 Gew.-%, vorzugsweise 0,05 bis etwa 2 Gew.-% liegt.

11. Verfahren nach einem der vorhergehenden Ansprüche, umfassend Bilden des Lichtbogenkontakts, so dass er mindestens eine gerundete Ecke aufweist, unter Verwendung der gerichteten Energieabscheidung.

12. Verfahren nach einem der vorhergehenden Ansprüche, umfassend Bilden des Lichtbogenkontakts, so dass er mindestens eine gezahnte Oberfläche aufweist, unter Verwendung der gerichteten Energieabscheidung.

13. Verfahren nach einem der vorhergehenden Ansprüche, umfassend Bilden des Lichtbogenkontakts, so dass er eine zumindest teilweise gewölbte Form aufweist, unter Verwendung der gerichteten Energieabscheidung.

## Revendications

1. Procédé destiné à fabriquer des contacts d'arc (110) pour des appareils électriques de commutation (700), le procédé comprenant :
l'obtention (S102) d'une poudre de matériau de contact (306) comprenant une poudre de matériau métallique qui est une poudre de matériau à base d'argent, et du graphène (503) et/ou du graphène fonctionnalisé (503), et
la formation (S104) d'un contact d'arc à partir de la poudre de matériau de contact sur un support de contact (102a, 104a, 106a, 302) par dépôt d'énergie dirigée.

2. Procédé selon la revendication 1, dans lequel le contact d'arc est fabriqué directement sur le support de contact par dépôt d'énergie dirigée.

3. Procédé selon l'une quelconque des revendications 1 et 2, dans lequel la formation du contact d'arc comprend :
la formation (S104a) d'une première couche de contact d'arc avec une première concentration de graphène et/ou de graphène fonctionnalisé dans la poudre de matériau de contact, puis
la formation (S104b) d'une deuxième couche de contact d'arc avec une deuxième concentration de graphène et/ou de graphène fonctionnalisé dans la poudre de matériau de contact.

4. Procédé selon l'une quelconque des revendications précédentes, dans lequel on fait varier la concentration du graphène et/ou du graphène fonctionnalisé dans la poudre de matériau de contact pendant la formation du contact d'arc pour former ainsi un contact d'arc avec un gradient spatial de graphène et/ou de graphène fonctionnalisé.

5. Procédé selon l'une quelconque des revendications 1 et 2, dans lequel la formation du contact d'arc comprend :
la formation d'une première couche de contact d'arc uniquement au moyen d'une poudre métallique ou d'une poudre de matériau de contact comprenant un mélange d'une poudre métallique et d'une poudre non métallique lors du dépôt d'énergie dirigée, puis
la formation d'une deuxième couche de contact d'arc au moyen de la poudre de matériau de contact comprenant une poudre de matériau métallique, et du graphène et/ou du graphène fonctionnalisé, lors du dépôt d'énergie dirigée.

6. Procédé selon l'une quelconque des revendications 1 et 2, dans lequel le matériau de contact est un mélange sensiblement homogène de la poudre métallique, et de graphène et/ou de graphène fonctionnalisé.

7. Procédé selon l'une quelconque des revendications précédentes, dans lequel une première poudre comprenant du graphène et/ou du graphène fonctionnalisé est mélangée avec une poudre de matériau métallique pendant le processus de fabrication additive, la première poudre étant un mélange du graphène et/ou du graphène fonctionnalisé avec une poudre du matériau métallique.

8. Procédé selon l'une quelconque des revendications précédentes, dans lequel la formation du contact d'arc est réalisée au moyen d'une seule étape de traitement de fabrication continue.

9. Procédé selon l'une quelconque des revendications précédentes, dans lequel la poudre de matériau de contact comprend plus d'un matériau métallique, et/ou dans lequel la poudre de matériau de contact comprend un matériau non métallique.

10. Procédé selon l'une quelconque des revendications précédentes, dans lequel la concentration de graphène (503) et/ou de graphène fonctionnalisé (503) dans la poudre de matériau de contact est comprise entre 0,01 % et 3 % en poids, de préférence entre 0,05 % et environ 2 % en poids.

11. Procédé selon l'une quelconque des revendications précédentes, comprenant la formation du contact d'arc pour qu'il ait au moins un coin arrondi, par dépôt d'énergie dirigée.

12. Procédé selon l'une quelconque des revendications précédentes, comprenant la formation du contact d'arc pour qu'il ait au moins une surface dentelée, par dépôt d'énergie dirigée.

13. Procédé selon l'une quelconque des revendications précédentes, comprenant la formation du contact d'arc pour qu'il ait une forme au moins partiellement bombée, par dépôt d'énergie dirigée.
